# EUROPÄISCHE PATENTANMELDUNG

(11) **EP 0 939 037 A1**
(43) Veröffentlichungstag der Anmeldung: **01.09.1999**
(21) Anmeldenummer: 98810155.6
(22) Anmeldetag: 26.02.1998
(51) Int. Cl.: B65D 65/40, B32B 3/30, G03H 1/02

(54) **Verpackungsmaterial**

(71) Anmelder: Alusuisse Technology & Management AG, 8212 Neuhausen am Rheinfall (CH)
(72) Erfinder: Gerber, Manfred, 78224 Singen (DE); Wendt, Jürgen, 78247 Weiterdingen (DE); Hummel, Otto, 78224 Singen (DE)

(57) **Zusammenfassung**

Verpackungsmaterial (9), beispielsweise für Tubenrohre, mit hologrammähnlichem Erscheinungsbild.

Durch ein mehrschichtiges Material mit einem Schichtaufbau, enthaltend:
a) eine ganz- oder teililächig geprägte Metallfolie (10) oder metallisierte Kunststofffolie und
b) einer darüberliegenden, zumindest in Teilbereichen transparenten, ein- oder mehrlagigen Kunststoffsehicht (11,13),
wobei an einer Verpackung die Kunststoffschicht b) (11,13) die aussenliegende Schicht bildet und die Prägung (17) der Metailfolie a) (10) durch die transparenten Bereiche der Kunststoffschicht b) (11,13) sichtbar ist, wird ein Verpackungsmaterial erzeugt, das einen hologrammähnlichen visuellen Eindruck beim Betrachter ergibt.

## Beschreibung

Vorliegende Erfindung betrifft ein Verpackungsmaterial mit hologrammähnlichem Erscheinungsbild und die Verwendung des Verpackungsmaterials.

Es ist bekannt, Verpackungsmaterialien oder Hilfsmittel zur Verpackung, wie Etiketten oder Siegelstreifen mit Hologrammen als unverfälschbare Herkunftsbezeichnung oder als Originalitätsverschluss zu versehen. Die Erzeugung von Hologrammen bedarf ausgesuchter Einzelmaterialien, die in mehreren Bearbeitungsschritten zum Endprodukt verarbeitet werden. Verpackungen mit Hologrammen ergeben bei Konsumenten den Eindruck hoher Güte des in der Verpackung enthaltenen Produktes. Es gibt nun viele Verpackungen, die nicht durch eine aufwendige Hologrammlösung gegen Verfälschung geschützt werden müssen, man möchte jedoch gerne den Güteeindruck des Hologramms auf eine kostengünstigere Verpackung übernehmen können.

Aufgabe vorliegender Erfindung ist es ein Verpackungsmaterial vorzuschlagen, welches ganz oder in Teilbereichen an einer Verpackung, wenigstens auf dessen nach aussen weisenden Seite, ein hologrammähnliches Erscheinungsbild aufweist.

Erfindungsgemäss wird dies dadurch erreicht, dass das Verpackungsmaterial ein mehrschichtiges Material mit einem Schichtaufbau, enthaltend:
a) eine ganz- oder teilflächig geprägte Metallfolie oder metallisierte Kunststofffolie und
b) eine darüberliegende zumindest in Teilbereichen transparente ein- oder mehrlagige Kunststoffschicht,
wobei an einer Verpackung die Kunststoffschicht b) die aussentiegende Schicht bildet und die Prägung der Metallfolie a) durch die transparenten Bereiche der Kunststoffschicht b) sichtbar sind.

Die Kunststoffschicht b) weist an einer fertigen Verpackung, hergestellt aus dem vorliegenden Verpackungsmaterial, gegen aussen. Auf der freien Seite der Metallfolie können weitere funktionellen Schichten, beispielsweise aus Kunststoff und/oder Papier angeordnet sein.

Als Metallfolie kann beispielsweise eine Eisen-, Stahl-, Kupfer-, Silber-, Gold- und insbesondere eine Aluminiumfolie angewendet werden. Die Folien können eine Dicke von beispielsweise 7 bis 100, zweckmässig 7 bis 40 und vorteilhaft 8 bis 40 µm, aufweisen. Die Aluminiumfolien können aus reinem Aluminium, mit einer Reinheit von beispielsweise 98,3% und höher sein oder können aus einer Aluminiumlegierung, beispielsweise der Typen AlFeSi oder AlFeSiMn sein. Werden metallisierte Kunststofffolien eingesetzt, kann der Kunststoff der Folie z.B. aus Polyamiden, Polyestern, Polyolefinen, Polyvinylchlorid, Polycarbonaten usw. sein. Die Dicke der Kunststofffolien kann z.B. von 7, vorzugsweise 12, bis 100 µm betragen. Auf wenigstens einer der Oberflächen der Kunststofffolie ist eine Metallschicht in einer Dicke von beispielsweise 5 bis 500 nm (Nanometer), erzeugt durch ein Metallisierungsverfahren, wie einer physikalischen oder chemischen Dünnschichtabseheidung im Vakuum, durch Sputtern usw., aus Eisen, Nickel, Chrom, Kupfer, Silber, Gold, Aluminium etc. vorhanden.

Die Metallfolie oder die metallisierte Kunststofffolie weisen eine Prägung auf. Die Prägung kann vollflächig, teilflächig oder partiell angebracht sein. Die Prägung kann durch Prägewalzen auf die Folien gebracht werden. Die Prägewalzen weisen das gewünschte Prägemuster auf und die Folien werden zwischen der Prägewalze und einer Gegendruckwalze, z.B. mit Papierbesehichtung, durchgeführt. Auf die Folie wird das Abbild der Walzenprägung übertragen. Die Prägung kann ein Raster, sich regelmässig oder unregelmässig wiederholende beliebige Muster, eine Damastprägung, Würmchenprägung, Hammerschlagprägung usw. sein. Jede andere Prägung ist möglich, wie Schriften, figürliche und abstrakte Darstellungen, bildhafte Darstellungen, Logos oder Kombinationen davon. Es ist auch möglich, sowohl geprägte Bereiche, als fallweise auch dazwischenliegende nicht geprägte Bereiche, einzufärben oder zu bedrucken. Damit kann die optische Wirkung einer Prägung verändert werden, wie z.B. verstärkt, abgeschwächt oder mit dem Lichteinfall wechselnd.

Die einlagige Kunststoffschicht kann ein durch Kalandrieren, beispielsweise durch Heisskalandrieren, erzeugter Kunststofffilm sein Die Dicke des kalandrierten einlagigen Kunststofffilms kann 20 bis 200 µm betragen. Als Kunststoffe können thermoplastische Kunststoffe, wie Polyolefine angewendet werden. Die Kunststoffschicht kann ein durch Coextrusion erzeugter wenigstens zweilagiger Kunststofffilm sein. Die Schichtdicke jeder einzelnen Schicht kann 20 bis 200 µm betragen. Als Kunststoffe können thermoplastische Kunststoffe, wie Ionomerharze (Surlyn) und Polyolefine angewendet werden. Die Kunststoffschicht kann ein durch Lackkaschierung auf die Metallfolie aufgebrachter Film aus thermoplastischem Kunststoff sein. Zweckmässig ist eine lösemittelhaltige oder lösemittelfreie Lackkaschierung. Die Lackkaschierung kann ein Polyolefin enthalten oder daraus bestehen. Ein Film aus thermoplastischem Kunststoff kann auch mittels eines Schmelzextrudates aus einen, thermoplastischen Kunststoff auf die Metallfolie aufgebracht werden. Das Schmelzextrudat kann ein Polyolefin enthalten oder daraus bestehen. Die angewendeten Mengen an Lack oder Schmelzextrudat können von 3 bis 80 g/m² und zweckmässig von 30 bis 50 g/m² betragen. Der Film aus thermoplastischem Kunststoff kann ein Monofilm oder ein zwei-, drei- oder mehrlagiger Film, resp. Laminat, sein. Der Film enthält Polyolefine oder besteht aus Polyolefinen. Die Gesamtdicke des Filmes aus thermoplastischen Kunststoffen beträgt beispielsweise 20 bis 200, zweckmässig 40 bis 150 und vorzugsweise 90 bis 120 µm.

Die Kunststoffschicht ist zweckmässig transparent oder zumindest in Teilbereichen transparent. Die Kunststoffschicht kann gefärbt oder klar sein. Die Kunststoffschicht kann bedruckt sein. Im Falle einer Lackkaschierung kann der Film bedruckt und/oder konterbedruckt sein. Eine Bedruckung und allfällig vorgesehene nicht transparente Teilbereiche der Kunststoffschicht werden sinngemäss derart angeordnet, dass zumindest Teilbereiche der Prägung in der Metallfolie jeweils durch die transparenten Teile der Kunststoffschicht sichtbar bleiben.

Bevorzugte thermoplastische Kunststoffe sind beispielsweise Polyolefine. Beispiele von Polyolefinen sind Polyethylene, z.B. Polyethylen hoher Dichte (HDPE, Dichte grösser als 0,944 g/cm³), Polyethylene mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³), lineares Polyethylen niedriger Dichte (LLDPE, Dichte 0,916-0,925 g/cm³), bzw. Gemische derselben. Andere Polyolefine sind Polypropylene, wie amorphes, kristallines oder hochkristallines Polypropylen, ataktisches oder isotaktisches Polypropylen und Gemische der genannten Polypropylene, gegossenes (cast) Polypropylen, Poly-1-buten, Poly-3-methylbuten, Poly-4-methylpenten und Copolymere davon, wie z.B. von Polyethylen mit Vinylacetat, Vinylalkohol oder Acrylsäure. Zu nennen sind auch Copolymerisate, bekannt als Ionomerharze, aus Ethylen mit etwa 11% Acrylsäure, Methacrylsäure, Acrylestern, Tetrafluorethylen oder Polypropylen. Zu den genannten Polymerisaten gehören auch die entsprechenden statistischen Copolymeren, Block-Copolymere oder Olefinpolymer-Elastomer-Mischungen. Bei Folien handelt es sich um unverstreckte und bevorzugt axial oder biaxial verstreckte Folien. Die Folien können ein Monomaterial oder ein zwei-, drei- oder mehrschichtiges Laminat sein.

Zweckmässige Verpackungsmaterialien weisen einen Schichtaufbau auf, enthaltend:
a) eine ganz oder teilflächig geprägte Metallfolie, insbesondere eine Aluminiumfolie,
b) eine mehrlagige Kunststoffschicht aus
   b₁) einer Lackkaschierung oder einem Schmelzextrudat und
   b₂) einer Folie enthaltend ein Polyolefin.

Vorzugsweise Verpackungsmaterialien weisen einen Schichtaufbau auf, enthaltend:
a) eine ganz oder teilflächig geprägte Metallfolie, insbesondere eine Aluminiumfolie,
b) eine mebrlagige Kunststoffschicht aus
   b₁) einem Schmelzextrudat aus Polyethlen und
   b₂) einer Folie enthaltend vorwiegend oder bestehend aus Polyethylen.

Die freie Seite der Metallfolie oder der metallisierten Kunststofffolie kann mit weiteren funktionellen Schichten belegt werden. Die Auswahl der funktionellen Schichten richtet sich nach dem Einsatzzweck des Verpackungsmaterials. Es können beispielsweise auf der freien Seite der Metallfolie oder der metallisierten Kunststofffolie eine oder mehrere weitere Kunststoffschichten und/oder eine Papierschicht oder eine Papier- und eine oder mehrere Kunststoffschichten und/oder weitere Metallfolien oder metallisierte Kunststofffolien angeordnet werden. Die Kunststoffschichten können beispielsweise durch Lackkaschierung, durch Kalandrieren oder durch Coextrusion aufgebracht werden. Papiere werden in der Regel durch Lackkaschierung oder Kleben aufgebracht.

Das erfindungsgemässe Verpackungsmaterial kann beispielsweise auf der freien Seite der Metallfolie oder der metallisierten Kunststofffolie durch Lackieren, Kalandrieren, durch Lackkaschierung oder durch Coextrusion mit Kunststoffscnichten belegt werden. Die Kunststoffschichten enthalten vorteilhaft thermoplastische Kunststoffe, wie die oben genannten Polyolefine, wobei die Polyethylene und Polypropylene besonders geeignet sind. Eine Lackierung oder Kaschierung kann in Mengen von z.B. 3 bis 80 g/cm² angewendet werden. Kunststofffilme können beispielsweise eine Dicke von 20 bis 150, zweckmässig 20 bis 100 und vorzugsweise von 50 bis 80 µm aufweisen.

Die auf der freien Seite der Metallfolie oder der metallisierten Kunststofffolie angeordneten funktionellen Schichten weisen an einer Verpackung, hergestellt aus vorliegendem Verpakkungsmaterial, gegen die Innenseite der Verpackung, d.h. gegen den Inhalt in der Verpakkung. Deshalb kann es vorteilhaft sein, in den funktionellen Schichten eine Sperrschicht vorzusehen, um ein Eindringen von Flüssigkeiten, Dämpfe, Aromen usw. in die funktionelle Schicht zu verhindern. Als äusserste, an einer Verpackung nach aussen weisende, Schicht und/oder die innerste, gegen den Inhalt einer Verpackung weisende, Schicht, kann eine Siegelschicht oder siegelbare Schicht vorgesehen werden. Sofern die beschriebenen Schichten nicht an sich siegelbar sind, kann ein zusätzlicher Siegellack oder siegelbare Folie eingesetzt werden.

Das Verpackungsmaterial kann, entsprechend dem Schichtaufbau, für verschiedene Verpackungen verwendet werden. Beispielsweise lassen sich vorliegende Verpackungsmaterialien für die Herstellung von Einschlagfolien, Folien für Einwickler, Schachteln Säcke, Beutel, Standbeutel, Sachets, Becher, Gobelets, Deckelmaterialien für beliebige Bodenteile, wie Schalen oder Menueschalen im Nahrungsmittelbereich oder Durchdrück- und Blisterpackungen im Pharmaziebereich, und bevorzugt Tuben verwenden.

Vorliegende Erfindung betrifft deshalb vorteilhaft auch die Verwendung des Verpackungsmaterials für Tuben. Ein besonders geeignetes Verpackungsmaterial für Tuben enthält den Schichtaufbau:
a₁) eine funktionelle Schicht
a) eine ganz oder teilflächig geprägte Metallfolie, insbesondere eine Aluminiumfolie oder eine ganz- oder teilflächig geprägte metailisierte Kunststofffolie
b) eine mehrlagige Kunststoffsehicht aus
   b₁) einer Lackkaschierung oder einem Schmelzextrudat und
   b₂) einer Folie enthaltend ein Polyolefin.

Die Folie b₂) kann ein oder beidseitig mit einem teilflächigen Druckmuster versehen sein.

Die funktionelle Schicht a₁) kann eine durch Kalandrieren, durch Lackkaschierung oder durch Coextrusion auf die Metallfolie oder die metaltisierte Kunststofffolie aufgebrachte Kunststoffschicht sein.

Ein Verpackungsmaterial, als Beispiel geeignet für die Herstellung von Tuben, enthält den Schichtaufbau:
a₁) eine funktionelle Schicht aus
   einer Folie enthaltend Polyolefine, insbesondere Polyethylene oder Polypropylene, in Dicken von 20 bis 150 µm und
   einer Lackkaschierung oder einem Schmelzextrudat aus einem Polyethylen, in Mengen von 3 bis 80 g/m²,
a) eine ganz oder teilflächig geprägte Metallfolie, insbesondere eine Aluminiumfolie oder eine ganz- oder teilflächig geprägte metallisierte Kunststofffolie, in einer Dicke von 7 bis 100 µm,
b) eine mehrlagige Kunststoffschicht aus
   b₁) einer Lackkaschierung oder einem Schmelzextrudat aus einem Polyethylen, in Mengen von 3 bis 80 g/m², und
   b₂) einer Folie, enthaltend Polyolefine, insbesondere Polyethylene oder Polypropylene, in Dicken von 20 bis 200 µm.

Es handelt sich dabei um ein Verpackungsmaterial, welches, bezogen auf die Metallfolie, resp. metallisierte Kunststofffolie, beispielhaft eine symmetrische Anordnung der Schichten aufweist. Die Dicken der einzelnen Schichten können ebenfalls in symmetrischer Weise gewählt sein. In erfinderischer Weise können auch Verpackungsmaterialien asymmetrischen Aufbaus gestaltet werden. An einer aus dem Verpackungsmaterial gefertigten Tube stellt die Polyolefinfolie der funktionellen Schicht a₁) die Innenseite und die Polyolefinfolie b₂) die Aussenseite der Tube und dabei insbesondere des Tubenrohres, dar. Die Polyolefine sind in der Regel siegelbar. Deshalb kann mittels Anlegen von Siegelnähten, aber auch durch Klebenähte, aus dem Verpackungsmaterial das Tubenrohr erzeugt werden. Das vorliegende Verpackungsmaterial ist demnach besonders zur Erzeugung des Tubenrohres einer Tube geeignet. Die Materialwahl und der Aufbau des Tubenkopfes Tubenkopf Die Befestigung des Tubenkopfes und das Verschliessen des Tubenendes kann ebenfalls durch Siegeln oder z.B. auch durch Kleben oder Schweissen, erfolgen.

Ein typisches Verpackungsmaterial für Tuben weist folgenden Schichtaufbau auf:
a₁) eine funktionelle Schicht, die an der Tube nach innen weist, aus
   einer Polyethylenfolie einer Dicke von 40 bis 80 µm,
   einer Lackkaschierung oder einem Schmelzextrudat aus Polyethylen in Mengen von 30 bis 50 g/m²,
a) eine ganz oder teilflächig geprägte Aluminiumfolie oder eine ganz- oder teilflächig geprägte metailisierte Kunststofffolie, in einer Dicke von 8 bis 40 µm,
b) eine mehrlagige transparente Kunststoffschicht aus
   b₁) einer Lackkaschierung oder einem Schmelzextrudat aus Polyethylen in Mengen von 30 bis 50 g/m², und
   b₂) einer Polyethylenfolie einer Dicke von 20 bis 200 µm, die an der Tube die Aussenseite bildet.

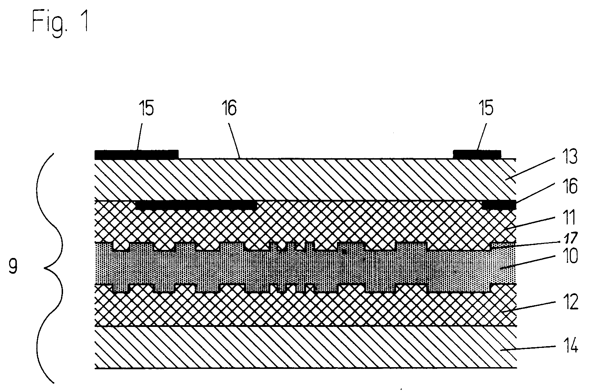

Die Figur 1 zeigt einen Schnitt durch ein Beispiel eines erfindungsgemässen Verpackungsmaterials 9. Die geprägte Metalifolie 10 ist auf der später an der Verpackung nach aussen weisenden Seite mit einer Schicht 11 eines Schmelzextrudates aus einem Polyethylen niedriger Dichte beschichtet. Darüber liegt eine Folie 13, wie eine Dreischichtfolie aus Polyethylen. Es sind mögliche Bedruckungen in Form eines an der Oberfläche angebrachten Druckes 15 und eines Konterdruckes 16 gezeigt. Die Beschichtung 11 und die Folie 13 sind transparent und die Prägung 17 ist durch die Kunststoffschicht aus Schmelzextrudat 11 und Folie 13 hindurch sichtbar. Auf der noch freien Seite der Metaltfolie 10 ist eine weitere Schicht 12 eines Schmelzextrudates und darauf angebracht eine weitere Folie 14, beispielsweise eine Polyethylenfolie, angeordnet. Wird nun aus dem Verpackungsmaterial 9 eine Tube oder zumindest das Tubenrohr, erzeugt, so weist die Folie 14 auf die Innenseite der Tube und somit gegen den Inhalt. Die Schicht 12 und Folie 14 können transparent oder auch opak sein. Es kann vorteilhaft sein, in oder auf der Folie 14 eine Sperrschicht vorzusehen, um zu vermeiden dass Inhaltsstoffe oder Teile davon in die Kunststoffschicht hineindiffundieren und für vorzeitigen Verderb der Inhaltsstoffe oder zu einer Delamination des Verpackungsmaterials führen. Für den Betrachter einer Tuhe aus dem erfindungsgemässen Verpackungsmaterial ist neben einem allfällig vorhandenen Druckbild aus Druck 15 und Konterdruck 16, insbesondere die durch die Kunststoffschicht durchscheinende Prägung 17, sichtbar. Der metallische Glanz und die Reflektion der Metailfolie 10 und dabei besonders die durch die Prägung beeinflusste Reflexion, führen zu optischen Effekten, die sich am leichtesten mit den durch Hologramme erzielten visuellen Eindrücken vergleichen lassen. Durch die Verwendung von Druck 15 und Konterdruck 16 und/oder durch nur in teilweise transparenten und/oder eingefärbten Folien 13 und/oder eingefärbte Prägungen 17 in der Metailfolie 10 lassen sich eine Vielzahl von graphischen Gestaltungsmöglichkeiten des Verpackungs- resp. Tubenäusseren erzielen. Ein Verpackungsmaterial, wie beschrieben, ist beispielsweise herstellbar durch Prägen der Metallfolie 10 mittels Prägewalzen, einseitiger Kaschierung mittels eines Schmelzextrudates 11 der Kunststofffolie 13 auf einer Seite der Metallfolie 10 und in einem weiteren Arbeitsgang dem Aufkaschieren mittels eines Schmelzextrudates 12 der weiteren Kunststofffolie 14 auf der noch freien Seite der Metallfolie 10. Selbstverständlich lässt sich die Reihenfolge des Beschichtens ändern oder gleichzeitig ausführen.

## Patentansprüche

1. Verpackungsmaterial mit hologrammähnlichem Erscheinungsbild und die Verwendung des Verpackungsmaterials,
dadurch gekennzeichnet, dass
dass das Verpackungsmaterial (9) ein mehrschichtiges Material ist mit einem Schichtaufbau, enthaltend:
a) eine ganz- oder teilflächig geprägte Metallfolie (10) oder metallisierte Kunststofffolie und
b) einer darüberliegenden, zumindest in Teilbereichen transparenten, ein- oder mehrlagigen Kunststoffschicht (11,13),
wobei an einer Verpackung die Kunststoffschicht b) (11,13) die aussenliegende Schicht bildet und die Prägung (17) der Metallfolie a) (10) durch die transparenten Bereiche der Kunststoffschicht b) (11,13) sichtbar ist.

2. Verpackungsmaterial gemäss Anspruch 1, dadurch gekennzeichnet, dass die Kunststoffschicht b) (11,13) an einer daraus gefertigen Verpackung nach aussen weist, und auf der freien Seite der Metallfolie (10) funktionelle Schichten (12,14), vorzugsweise aus Kunststoff und/oder Papier angeordnet sind.

3. Verpackungsmaterial gemäss Anspruch 1, dadurch gekennzeichnet, dass der Schichtaufbau
a) eine ganz oder teilflächig geprägte Metallfolie (10), insbesondere eine Aluminiumfolie oder eine ganz- oder teilflächig geprägte metallisierte Kunststofffolie, und
b) eine mehrlagige Kunststoffschicht (11,13) aus
b₁) einer Lackkaschierung oder einem Schmelzextrudat (11) und
b₂) einer Folie (13), enthaltend ein Polyolefin, enthält.

4. Verpackungsmaterial gemäss Anspruch 1, dadurch gekennzeichnet, dass der Schichtaufbau
a) eine ganz oder teilflächig geprägte Metallfolie (10), insbesondere eine Aluminiumfolie oder eine ganz- oder teilflächig geprägte metallisierte Kunststofffolie, und
b) eine mehrlagige Kunststoffschicht (11,13) aus
b₁) einem Schmelzextrudat (11) aus Polyethlen und
b₂) einer Folie (13) enthaltend Polyolefine und insbesondere Polyethylen, enthält.

5. Verpackungsmaterial gemäss Anspruch 1, dadurch gekennzeichnet, dass der Schichtaufbau
a₁) eine funktionelle Schicht (12,14),
a) eine ganz oder teilflächig geprägte Metallfolie (10), insbesondere eine Aluminiumfolie oder eine ganz- oder teilflächig geprägte metallisierte Kunststofffolie, und
b) eine mehrlagige Kunststoffschicht (11,13) aus
b₁) einer Lackkaschierung (11) und
b₂) einer Folie (13), enthaltend Polyolefine und insbesondere Polyolefine, enthält.

6. Verpackungsmaterial gemäss Anspruch 1, dadurch gekennzeichnet, dass der Schichtaufbau nacheinander
a₁) eine funktionelle Schicht (12,14) aus einer Folie (14), enthaltend Polyolefine, insbesondere Polyethylene oder Polypropylene, in Dicken von 20 bis 150 µm, und eine Lackkaschierung oder einem Schmelzextrudat (12) aus einem Polyethylen, in Mengen von 3 bis 80 g/m²,
a) eine ganz oder teilflächig geprägte Metallfolie (10), insbesondere eine Aluminiumfolie oder eine ganz- oder teilflächig geprägte metallisierte Kunststofffolie, in einer Dicke von 7 bis 100 µm,
b) eine mehrlagige Kunststoffschicht (11,13)aus
b₁) einer Lackkaschierung oder einem Schmelzextrudat (11) aus einem Polyethylen, in Mengen von 3 bis 80 g/m²,und
b₂) einer Folie (13), enthaltend Polyolefine, insbesondere Polyethylene oder Polypropylene, in Dicken von 20 bis 200 µm, enthält.

7. Verpackungsmaterial gemäss Anspruch 1, dadurch gekennzeichnet, dass das Verpackungsmaterial einen Tubenkörper bildet und der Schichtaufbau nacheinander
a₁) eine funktionelle Schicht (12,14), die an der Tube nach innen weist, aus einer Polyethylenfolie (14) einer Dicke von 40 bis 80 µm und einer Lackkaschierung oder einem Schmelzextrudat (12) aus Polyethylen in Mengen von 30 bis 50 g/m²,
a) eine ganz oder teilflächig geprägte Aluminiumfolie (10) oder eine ganz- oder teilflächig geprägte metallisierte Kunststofffolie, in einer Dicke von 8 bis 40 µm,
b) eine mehrlagige transparente Kunststoffschicht (11,13) aus
b₁) einer Lackkaschierung oder einem Schmelzextrudat (11) aus Polyethylen in Mengen von 30 bis 50 g/m², und
b₂) einer Polyethylenfolie (13) einer Dicke von 20 bis 200 µm, die an der Tube die Aussenseite bildet,
enthält.

8. Verpackungsmaterial gemäss Ansprüchen 3 bis 7, dadurch gekennzeichnet, dass die Folie b₂) (13) ein- oder beidseitig ein Druckmuster aufweist.

9. Einschlagfolien, Folien für Einwickler, Schachteln Säcke, Beutel, Standbeutel, Sachets, Becher, Gobelets, Deckelmaterialien für Bodenteile und bevorzugt Tuben enthaltend oder bestehend aus einem Verpackungsmaterial gemäss Anspruch 1.
